Europäisches Patentamt

European Patent Office

Office européen des brevets

(11) Numéro de publication : **0 289 376 B1**

(12) **FASCICULE DE BREVET EUROPEEN**

(45) Date de publication du fascicule du brevet :
27.11.91 Bulletin 91/48

(51) Int. Cl.⁵ : **G10K 11/16**

(21) Numéro de dépôt : **88400766.7**

(22) Date de dépôt : **30.03.88**

(54) **Panneau acoustique pour garniture insonorisante et turboréacteur comportant une telle garniture.**

(30) Priorité : 08.04.87 FR 8704908

(43) Date de publication de la demande :
02.11.88 Bulletin 88/44

(45) Mention de la délivrance du brevet :
27.11.91 Bulletin 91/48

(84) Etats contractants désignés :
**DE FR GB**

(56) Documents cités :
**EP-A- 0 057 621**

(73) Titulaire : **SOCIETE NATIONALE D'ETUDE ET
DE CONSTRUCTION DE MOTEURS
D'AVIATION, "S.N.E.C.M.A."
2, Boulevard du Général Martial Valin
F-75015 Paris (FR)**

(72) Inventeur : **Autie, Pascal Jean-Louis Marie
3, Villa Brune
F-75014 Paris (FR)**
Inventeur : **Avignon, Philippe Pierre
4, rue des Carneaux
F-77380 Combs La Ville (FR)**
Inventeur : **Camusso, Dominique Paul
307, Allée du Dragon
F-91000 Evry (FR)**
Inventeur : **Forestier, Alexandre
451, rue du Tertereau Vaux le Penil
F-77000 Melun (FR)**
Inventeur : **Ulryck Gilles
23, Lot du Bois
F-91610 Ballancourt (FR)**

(74) Mandataire : **Moinat, François et al
S.N.E.C.M.A. Service des Brevets Boîte
Postale 81
F-91003 Evry Cédex (FR)**

## Description

L'invention concerne la réalisation des garnitures insonorisantes pour des conduits de gaz tels que par exemple les veines de flux secondaire des turboréacteurs double flux pour avions.

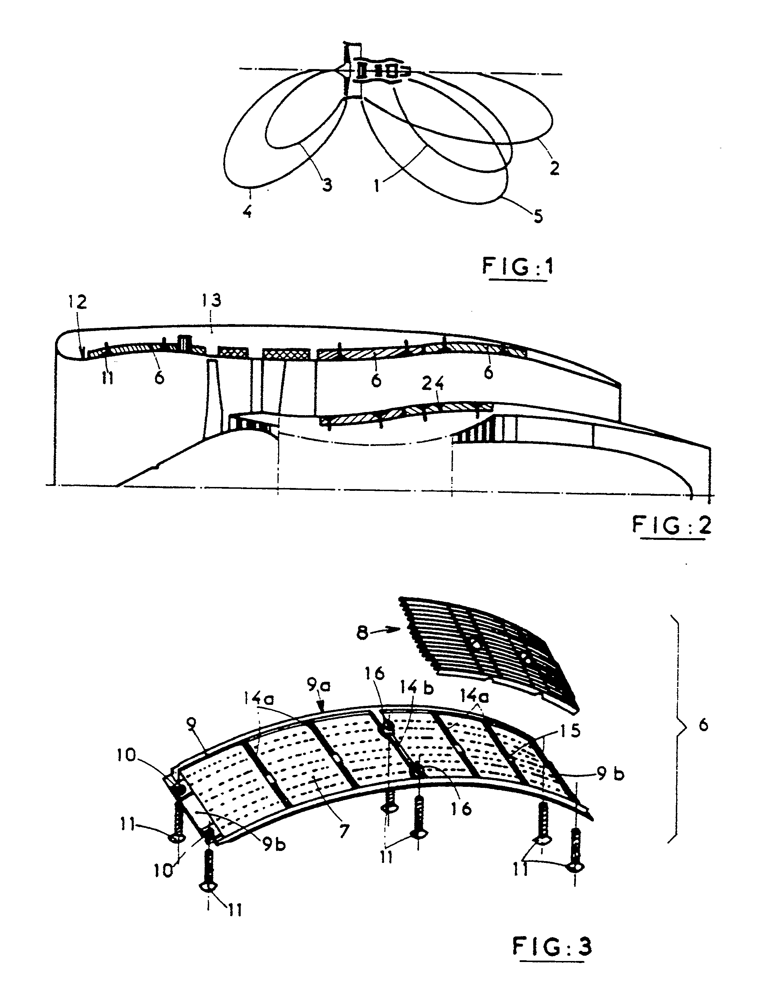

Les turboréacteurs sont la cause de nombreuses sources de bruits lors de leur fonctionnement et la figure 1 montre par rapport à l'axe d'un turtoréacteur la directivité des divers bruits.

Une première source de bruit est le bruit interne qui a pour origine la combustion et la détente des gaz chauds à travers la turbine et qui est émis en un faisceau 1 dirigé vers l'aval du moteur.

Une seconde source de bruit est le bruit de jet 2 lui aussi dirigé vers l'aval du moteur et créé dans la zone de mélange de flux où les turbulences sont très développées en raison des différences importantes de vitesses entre les flux (flux chaud et flux froid, flux froid et air environnant).

Une autre source de bruit, celle-là dirigée vers l'amont 3 est causée par le compresseur moyenne pression.

Enfin une dernière source de bruit est causée par la soufflante disposée dans le flux secondaire. Le bruit de soufflante se développe en deux lobes, l'un 4, dirigé vers l'avant du moteur, l'autre 5, dirigé vers l'aval. Bien que d'un niveau légèrement inférieur au bruit de jet, le bruit de soufflante présente l'inconvénient de se développer en lobes très largement étalés latéralement par rapport à l'avion.

La règlementation imposant une réduction des niveaux de bruit aux environs des aéroports a conduit à s'intéresser de très près aux moyens propres à réduire ces bruits de soufflante. L'un de ces moyens consiste à utiliser sur la partie intérieure du carter externe du flux froid des revêtements de matériaux poreux de bonne qualité absorbante ou des garnitures insonorisantes à résonateurs de Helmoltz.

Dans ce dernier cas, on a déjà proposé dans le brevet FR-A-2498793 de réaliser une garniture insonorisante appliquée contre la paroi d'une veine de gaz, du genre comprenant d'une part une pluralité de panneaux minces perforés juxtaposés par tuilage et d'autre part, entre ladite paroi et chacun desdits panneaux perforés, une couche intermédiaire conformée pour délimiter avec ledit panneau perforé une pluralité de cavités acoustiques résonnantes dont les évents acoustiques sont constitués par les orifices du panneau perforé, chaque panneau mince perforé étant fixé directement à la paroi par des vis logées dans des entretoises alésées, et maintenant la couche intermédiaire entre lui et la paroi.

Un tel dispositif, s'il est très efficace, présente néanmoins l'inconvénient d'être relativement compliqué à réaliser et à monter puisqu'il nécessite la fabrication d'entretoises complexes, de rondelles alésées, les unes et les autres devant être collées de part et d'autre de la peau perforée.

La présente invention vise à simplifier la fabrication et le montage des garnitures insonorisantes du genre décrit ci-dessus et à en améliorer la tenue en service en créant au montage une précontrainte qui supprimera les vibrations que pouvaient subir les garnitures précitées.

L'invention concerne donc, selon un préambule établi à partir de l'état de la technique constitué par le brevet FR-A-2498793, un panneau acoustique pour garniture insonorisante applicable à la paroi d'une veine de gaz notamment à un carter externe de flux secondaire de turboréacteur, panneau comprenant une peau interne multiperforée surmontée d'une structure alvéolaire comportant une pluralité de cavités acoustiques résonnantes dont les évents acoustiques sont constitués par les orifices de la peau interne.

Selon une caractéristique de l'invention, la peau interne est fixée par collage sur un cadre raidisseur allongé ayant une courbure circulaire dans le sens de sa longueur et possédant des entretoises dans le sens de sa largeur, la structure alvéolaire est constituée par une peau nervurée dont les nervures ont une courbure circulaire différente de celle de la peau interne et la peau nervurée comporte au moins une paire de languettes élastiques venant s'encliqueter dans des logements amincis correspondants des entretoises du cadre pour assurer la fixation de la structure alvéolaire sur le cadre.

Selon une autre caractéristique, la peau nervurée est constituée d'une feuille mince de résine polymère portant des nervures courbées délimitant les cavités résonnantes tandis que les languettes sont constituées par des parties découpées ménagées dans des alvéoles moulés en creux dans la feuille mince.

D'autres particularités de l'invention seront décrites dans la suite de la description accompagnée de planches de figures parmi lesquelles :

— la figure 1 montre l'étendue des diverses zones de bruits émis par un turboréacteur double flux, dont il a été question plus haut ;

— la figure 2 montre sur une coupe schématique d'un turboréacteur double flux les zones du carter externe sur lesquelles peuvent être disposées des garnitures insonorisantes selon l'invention ;

— la figure 3 montre en perspective les parties constitutives d'un panneau acoustique selon l'invention ;

— la figure 4 montre une vue selon F de la figure 5 de la peau nervurée formant la structure alvéolaire ;

— la figure 5 est une coupe suivant BB de la figure 4 ;

— la figure 6 montre une coupe suivant CC de la figure 4 ;

— la figure 7 montre, grossies, les languettes d'accrochage de la peau nervurée sur le cadre raidisseur selon le détail A de la figure 5 ;
— la figure 8 montre le même détail vu de dessus en vue selon F1 de la figure 5.

En se référant à la figure 3, la garniture insonorisante selon l'invention est réalisée au moyen de panneaux acoustiques 6 constitués d'une part d'une peau interne multiperforée 7 en résine polymère moulée armée de fibres minérales ou organiques, d'autre part d'une structure alvéolaire 8 venant s'assembler sur la peau 7.

La peau 7 est fixée par collage sur (ou venue de moulage avec) un cadre raidisseur 9 allongé et possédant une courbure circulaire dans le sens 9a de sa longueur.

Les deux bords 9b formant la largeur du cadre sont rectilignes et comportent des alésages 10 qui permettront la fixation par des vis 11 du panneau 6 assemblé sur la paroi intérieure 12 du carter externe 13 du flux froid d'un turboréacteur double flux (ainsi que représenté à la figure 2).

Les bords 9b sont conformés en tuile, c'est à dire de telle sorte que l'un vienne recouvrir le bord adjacent du panneau consécutif formant la garniture insonorisante.

Régulièrement réparties entre les deux bords 9b, se trouvent un certain nombre d'entretoises 14a et 14b. Chaque entretoise 14a comporte un logement 15 formé d'une partie amincie de l'entretoise déterminant entre la peau interne 7 et le logement un espace libre dans lequel viendront s'encliqueter les languettes élastiques de fixation de la structure alvéolaire 8 qui sera décrite ci-après.

L'entretoise médiane 14b, quant à elle, est renforcée et comporte deux bossages 16 alésés qui recevront des vis 11 de fixation de l'ensemble 6 à la paroi support.

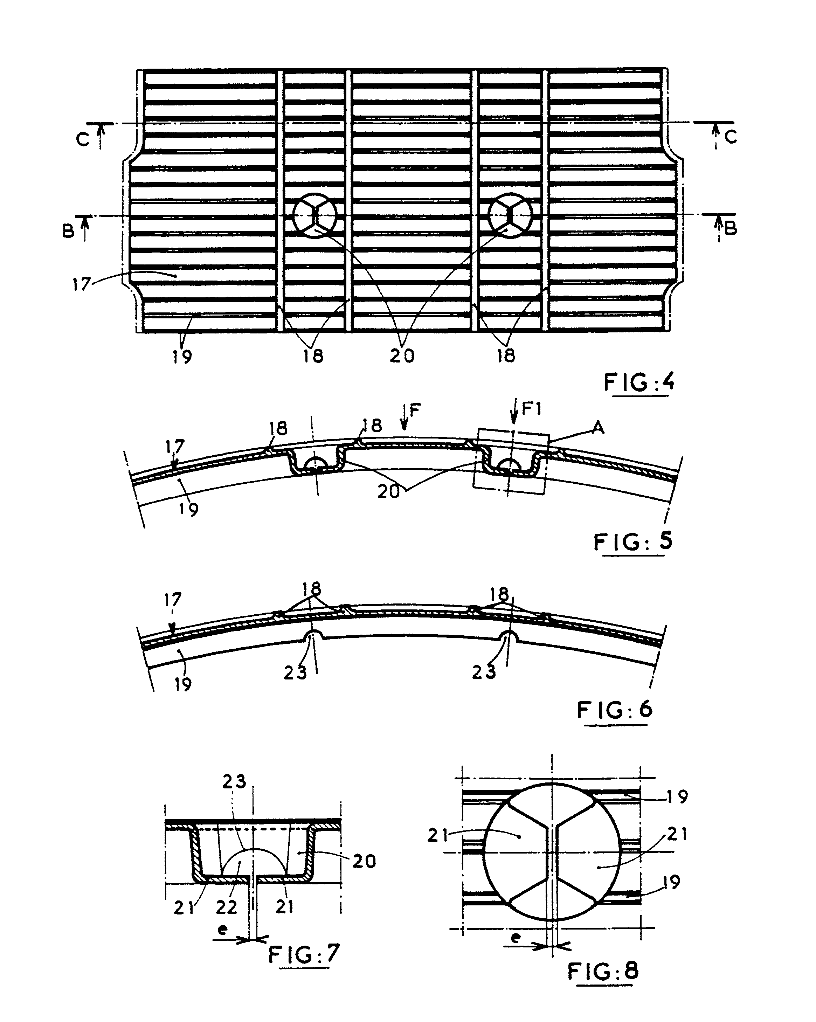

En se référant maintenant aux figures 4 à 8, la structure alvéolaire est constituée d'une feuille mince 17 de résine polymère (par exemple élastomère) renforcée par des bandes transversales rigides 18 et portant des nervures 19 dont le bord libre s'appliquera contre la peau perforée 7 pour former avec celle-ci des cavités résonnantes étanches entre elles.

Entre chaque paire de raidisseurs 18 montrés à la figure 4, la feuille mince 17 comporte un alvéole 20 moulé en creux dans lequel on effectue une découpe libérant deux languettes repliées 21 séparées par un espace "e".

Les languettes 21 étant moulées en creux par rapport à la feuille élastomère 17 laissent entre elles et cette dernière un espace libre 22 qui permettra au montage de recevoir par encliquetage la partie amincie du logement 15 des entretoises 14a du cadre raidisseur 9 de la peau perforée 7. Pour que ce montage puisse se réaliser chaque nervure 19 de la structure alvéolaire 8 possède, au droit des alvéoles 20, des échancrures 23, celles-ci libérant un passage pour les entretoises 14a au montage.

Enfin, il faut ajouter que l'on a donné au cadre raidisseur une courbure plus forte que celle donnée à la structure alvéolaire 8, ceci afin que lors du montage de celle-ci sur le cadre raidisseur au moyen des deux paires de languettes 21 disposées sur un même cercle, le panneau acoustique ainsi réalisé soit soumis à une précontrainte qui assurera une bonne étanchéité entre les nervures 19 et la peau perforée et donc un bon fonctionnement des cavités résonnantes, et en outre diminuera les vibrations que pourrait subir en service le panneau acoustique.

Le panneau tel que décrit ci-dessus et à la figure 3 comprend une fois monté, un cadre raidisseur supportant la peau perforée 7, et deux structures alvéolaires bout à bout, clipsées sur les entretoises 14a au moyen des languettes 21.

L'invention a également pour objet les garnitures insonorisantes faites d'une succession sur le pourtour de la paroi, de panneaux 6 tels que décrits ci-dessus, ces garnitures pouvant être disposées ainsi que le montre la figure 2, soit en amont de la soufflante pour diminuer le bruit de soufflante 4 vers l'avant du moteur, soit en aval de la soufflante pour atténuer le bruit 5 en aval du moteur.

L'invention a également pour objet de façon plus générale les turboréacteurs double flux, pour l'aviation lorsqu'ils comprennent sur la partie intérieure du carter externe du flux secondaire, ou sur le bord externe 24 du carter intermédiaire (comme montré à la figure 2) des garnitures insonorisantes telles que décrites ci-dessus.

Il va sans dire que dans ce dernier cas la courbure des panneaux acoustiques doit être inversée afin que la peau perforée affleure le bord externe du carter intermédiaire.

**Revendications**

1. Panneau acoustique pour garniture insonorisante applicable à la paroi d'une veine de gaz notamment un carter externe de flux secondaire de turboréacteur, panneau comprenant une peau interne multiperforée (7) surmontée d'une structure alvéolaire (8) comportant une pluralité de cavités acoustiques résonnantes dont les évents acoustiques sont constitués par les orifices de la peau interne caractérisé en ce que la peau interne (7) est fixée par collage sur un cadre raidisseur (9) allongé ayant une courbure circulaire dans le sens de sa longueur et possédant des entretoises (14a, 14b) dans le sens de sa largeur, en ce que la structure alvéolaire (8) est constituée par une peau nervurée (17, 19) dont les nervures (19) ont une courbure circulaire différente de celle de la peau interne et en ce que la peau nervurée comporte au moins une paire de languettes (21) élastiques venant s'encliqueter dans des logements (15) amincis correspondants des entretoises (14a) du cadre (9) pour assurer la fixation de la structure alvéolaire sur le cadre.

2. Panneau acoustique selon la revendication 1, caractérisé en ce que la peau nervurée est constituée d'une feuille mince de résine polymère (17) portant des nervures (19) délimitant les cavités résonnantes et en ce que les languettes (21) sont constituées par des parties découpées ménagées dans des alvéoles (22) moulés en creux dans la feuille mince (17).

3. Panneau acoustique selon l'une des revendications 1 ou 2 caractérisé en ce que le cadre raidisseur (9) a une courbure supérieure à celle de la peau nervurée (17) pour assurer une mise en contrainte du panneau acoustique (6) lors de la fixation de la peau nervurée sur le cadre.

4. Panneau acoustique selon l'une quelconque des revendications 1 à 3 caractérisé en ce que les bords du cadre constituant sa largeur (9b) sont constitués en forme de tuile venant recouvrir le bord du panneau adjacent pour former la garniture insonorisante, lesdits bords comportant des perçages (10) pour la fixation par vis (11) du panneau (6) sur la paroi (12, 24) de la veine de gaz.

5. Garniture circulaire insonorisante caractérisée en ce qu'elle est constituée d'une succession de panneaux acoustiques (6) selon l'une des revendications précédentes, lesdits panneaux ayant leurs bords en forme de tuile se recouvrant.

6. Turboréacteur double flux d'aviation caractérisé en ce qu'il comporte à l'intérieur (12) du carter externe (13) de son flux secondaire une garniture insonorisante selon la revendication 5.


**Patentansprüche**

1. Akustische Platte für ein schalldämpfendes Futter zur Anbringung an der Wand eines Gasströmungskanals, insbesondere an dem Außengehäuse für die Sekundärströmung eines Turboluftstrahltriebwerks, wobei die akustische Platte eine mit zahlreichen Perforationslöchern versehene Innenhaut (7) aufweist, über der sich eine Zellenstruktur (8) befindet, die eine Vielzahl von akustischen Resonanzhohlräumen besitzt, deren akustische Schallöffnungen von den Perforationslöchern der Innenhaut gebildet werden, dadurch gekennzeichnet, daß die Innenhaut (7) durch Kleben auf einem länglichen, in Richtung seiner Längsausdehnung kreisförmig gekrümmten Verstärkungsrahmen (9) befestigt ist, der in Breitenrichtung Verstrebungen (14a, 14b) besitzt, daß die Zellenstruktur (8) von einer gerippten Haut (17, 19) gebildet ist, deren Rippen (19) eine von der Krümmung der Innenhaut abweichende kreisförmige Krümmung haben, und daß die gerippte Haut wenigstens ein Paar von elastischen Zungen (21) aufweist, die in korrespondierenden verjüngten Aufnahmeöffnungen (15) der Verstrebungen (14a) des Verstärkungsrahmens (9) verrasten, um die Befestigung der Zellenstruktur an dem Rahmen zu sichern.

2. Akustische Platte nach Anspruch 1, dadurch gekennzeichnet, daß die gerippte Haut aus einem dünnen Blatt (17) aus Polymerharz besteht, das die die Resonanzhohlräume begrenzenden Rippen (19) trägt, und daß die Zungen (21) aus ausgeschnittenen Teilen bestehen, die in Zellen (22) angeordnet sind, die durch Hohlformung in dem dünnen Blatt (17) ausgebildet sind.

3. Akustische Platte nach einem der Ansprüche 1 oder 2, dadurch gekennzeichnet, daß die Krümmung des Verstärkungsrahmens (9) größer ist als die Krümmung der gerippten Haut (17), so daß die akustische Platte (6) bei der Befestigung der gerippten Haut an dem Rahmen unter Spannung gesetzt wird.

4. Akustische Platte nach einem der Ansprüche 1 bis 3, dadurch gekennzeichnet, daß die die Breitseite bestimmenden Ränder des Rahmens ziegelartig ausgebildet sind und für die Bildung des schalldämpfendes Futters den benachbarten Rand der Platte überdecken, wobei die Ränder Löcher (10) besitzen für die mit Hilfe von Schrauben (11) erfolgende Befestigung der Platte (6) an der Wand (12, 24) des Gasströmungskanals.

5. Kreisrundes schalldämpfendes Futter, dadurch gekennzeichnet, daß es aus einer aufeinanderfolgenden Reihe von akustischen Platten (6) nach einem der vorhergehenden Ansprüche besteht, deren Ränder ziegelartig ausgebildet sind und einander überlappen.

6. Zweistrom-Turboluftstrahltriebwerk, dadurch gekennzeichnet, daß es im Innern (12) des Außengehäuses (13) seiner Sekundärströmung ein schalldämpfendes Futter nach Anspruch 5 besitzt.


**Claims**

1. Acoustic panel for sound-absorbent linings applicable to the wall of gas duct notably the outer cowling of the bypass flow of a turbojet engine, the panel comprising an inner skin with multiple perforations (7) backed by an alveolar structure (8) comprising a plurality of acoustic resonance cavities whose acoustic ports are constituted by the holes in the inner skin characterised in that the inner skin (7) is fixed by bonding to an elongated stiffening frame (9) with a circular curvature in the direction of its length and possessing spacers (14a, 14b) across its width, in that the alveolar structure (8) is made up of a ribbed skin (17, 19) whose ribs (19) have a circular curvature different from that of the inner skin and in that the ribbed skin comprises at least one pair of spring tongues (21) which click into place in matching thinned-down housings (15) in the spacers (14a) of the frame (9) to ensure the fastening of the alveolar structure to the frame.

2. Acoustic panel in accordance with Claim 1, characterised in that the ribbed skin is made up of a thin sheet of resin polymer (17) carrying ribs (19) delimiting the resonance cavities and in that the tongues (21) are constituted by parts cut out from inside cells (22) moulded as recesses in the thin sheet (17).

3. Acoustic panel in accordance with Claims 1 or 2 characterised in that the stiffening frame (9) possesses a curvature greater than that of the ribbed skin (17) to ensure that the acoustic panel (6) is prestressed during the fastening of the ribbed skin to the frame.

4. Acoustic panel in accordance with any one of Claims 1 to 3 characterised in that the edges of the frame constituting its width (9b) are made with an interlocking rebate, like tiles, so as to cover the edge of the adjoining panel to form the sound-absorbent lining, the said edges comprising holes (10) for bolts (11) to hold the panel (6) onto the wall (12, 24) of the gas duct.

5. Circular sound absorbent lining characterised in that it is made up of a succession of acoustic panels (6) in accordance with one of the preceding Claims, the said panels having their edges in the form of overlapping rebates.

6. Aircraft bypass turbojet engine characterised in that it comprises on the inside (12) of the outer cowling (13) of its bypass airflow a sound-absorbent lining in accordance with Claim 5.

FIG:1

FIG:2

FIG:3

FIG:4

FIG:5

FIG:6

FIG:7

FIG:8